# EUROPÄISCHE PATENTSCHRIFT

(11) **EP 1 614 941 B1**
(45) Veröffentlichungstag und Bekanntmachung des Hinweises auf die Patenterteilung: **25.11.2009**
(21) Anmeldenummer: 05014045.8
(22) Anmeldetag: 29.06.2005
(51) Int. Cl.: F16H 63/22

(54) **Getriebeeinrichtung für ein Kraftfahrzeug**
Transmission device for vehicle
Dispositif de transmission pour véhicule

(30) Priorität: 08.07.2004 DE 102004032990
(43) Veröffentlichungstag der Anmeldung: 11.01.2006
(73) Patentinhaber: LuK Lamellen und Kupplungsbau Beteiligungs KG, 77815 Bühl (DE)
(72) Erfinder: Ehrlich, Matthias, 77815 Bühl (DE); Esly, Norbert, 77815 Bühl (DE)
(74) Vertreter: Duschl, Edgar Johannes

(56) Entgegenhaltungen:
- WO-A-2004/046588
- DE-A1- 10 206 561

## Beschreibung

Die Erfindung betrifft eine Getriebeeinrichtung für ein Kraftfahrzeug sowie eine Baugruppe mit mehreren Verbindungselementen und einer Betätigungseinrichtung für eine solche Getriebeeinrichtung.

Bei Gangwechselvorgängen in klassisch gestalteten gestuften Kraftfahrzeug-Getriebeeinrichtungen laufen - ausgehend von dem alten Gang - die folgenden drei Schritte in zeitlicher Abfolge ab: "Auslegen des alten Ganges" - "Wählen" - "Einlegen des Zielganges". Darüber hinaus sind Kraftfahrzeuggetriebegestaltungen bekannt geworden, bei denen das Wählen bzw. Wählbewegungen vor dem Auslegen des alten Ganges stattfinden kann. Bei solchen Gestaltungen ist beispielsweise vorgesehen, das ein Hauptbetätigungselement bzw. Schaltfinger im Wesentlichen nur für das Einlegen von Gängen zuständig ist und zusätzliche Geometrien die Funktion des Auslegens von Gängen übernehmen. Dabei werden insbesondere so genannte Nebenbetätigungselemente für die Auslegefunktion verwendet. Bekannt ist weiter, dass sich die zusätzlichen Geometrien einerseits an einer zentralen Schaltwelle befinden und andererseits an Schaltmäulern, die an Endausgangsmechanismen bzw. Schaltgabeln oder Schaltschienen vorgesehen sind.

Die Auslegegeometrien wirken in aller Regel in Gassen, in denen der Schaltfinger nicht aktiv ist. Dabei kann vorgesehen sein, dass eine feste Zuordnung zwischen Schaltfinger und Auslegegeometrie, dabei gleichzeitig eine aktive Gangsperre darstellt. Konstruktive Umsetzungen dieses Ansatzes werden daher auch als "Active Interlock" bezeichnet.

Bei einem solchen "Active Interlock" ist in aller Regel vorgesehen, dass das Hauptbetätigungselement bzw. der Schaltfinger auch bei eingelegtem Gang in eine Mittel- bzw. Neutralposition zurück bewegt werden kann, ohne den Gang auszulegen. Die Wählbewegung wird dabei möglich, bevor der Gang ausgelegt ist.

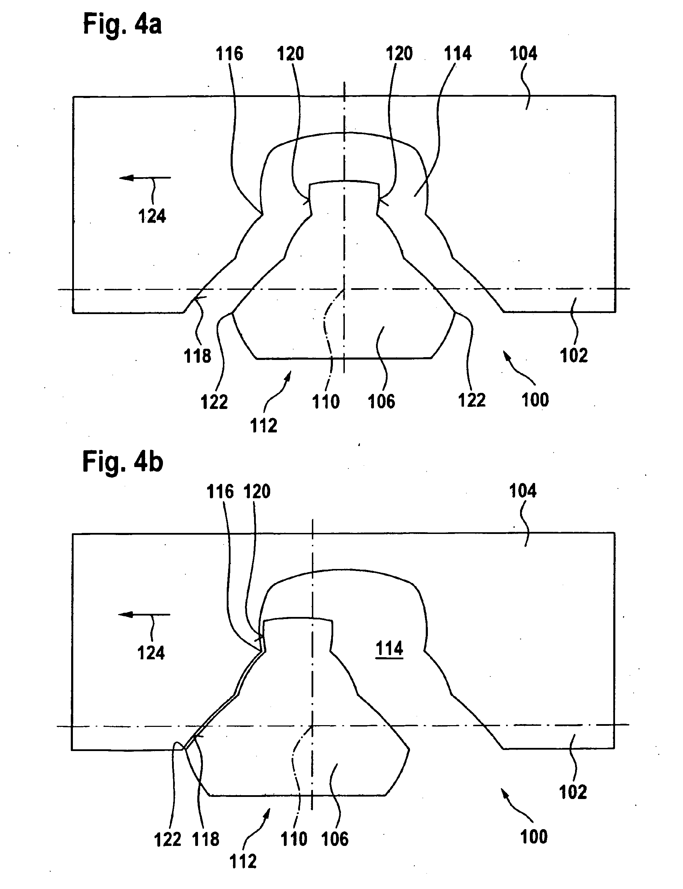

Eine der Anmelderin bekannte Getriebeeinrichtung, bei der das Wählen vor dem Auslegen des alten Ganges durchgeführt werden kann bzw. die mit "Active Interlock" versehen ist, ist in den Fig. 4a bis 4f in teilweiser Ansicht gezeigt. Diese Getriebeeinrichtung 100 weist mehrere Schaltschienen 104 auf, die jeweils Bestandteil eines jeweiligen Endbetätigungsmechanismus 102 sind. Jeder der Endbetätigungsmechanismen 102 weist also eine Schaltschiene 104 auf.

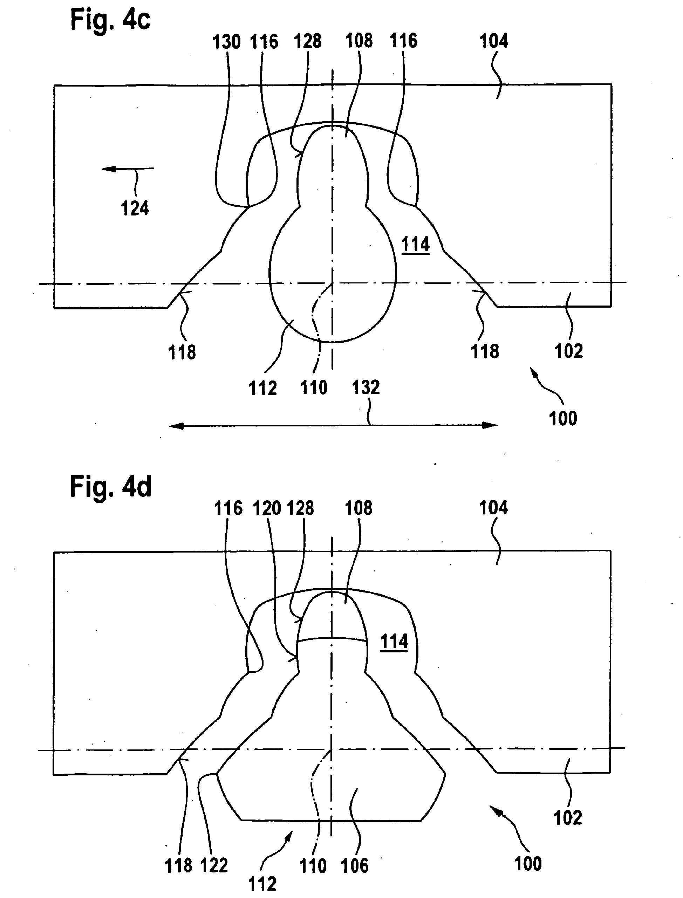

In der Darstellung gemäß Fig. 4a ist insbesondere eine Schaltschiene 104 gezeigt, sowie der Querschnitt eines Nebenbetätigungselements 106. Dieses Nebenbetätigungselement 106 ist - ebenso wie das in Fig. 4c gezeigt Hauptbetätigungselement 108 - drehbar angeordnet, und zwar um eine Achse 110. Hierzu sind das Hauptbetätigungselement 108 und die Nebenbetätigungselemente 106 - axial versetzt - an einer Dreh- bzw. Betätigungswelle 112 angeordnet, die drehbar und axialverschieblich gelagert ist. In den Schaltschienen 104 ist jeweils ein Ausschnitt vorgesehen, der ein Schaltmaul 114 darstellt. In Fig. 4a befinden sich beide Elemente, also die Schaltschiene 104 sowie das Nebenbetätigungselements 106, in der Schaltstellung "neutral".

Das Schaltmaul 114 weist eine bzw. zwei Kanten 116 sowie eine bzw. zwei Flanken 118 auf, welche zum Auslegen der Gänge mit dem Nebenbetätigungselement 106 über die Flanken 120 bzw. die Kante 122 in Kontakt treten. Wenn die Flanke 120 infolge einer entsprechenden Rotation des Nebenbetätigungselements 106 mit der Kante 116 in Kontakt tritt und eine translatorische Bewegung der Schaltschiene 104 auslöst (vgl. Pfeil 124), so wird eine "gleichsinnige Bewegung" zwischen Nebenbetätigungselement 106 und Schaltschiene 104 erzeugt. Wenn die Kante 122 infolge einer entsprechenden Rotation des Nebenbetätigungselements 106 mit der Flanke 118 in Kontakt tritt und eine translatorische Bewegung der Schaltschiene 104 auslöst (vgl. Pfeil 124), so wird eine "gegensinnige Bewegung" zwischen dem Nebenbetätigungselement 106 und der Schaltschiene 104 erzeugt. Der Zusammenhang ist in der Fig. 4b symbolisch dargestellt.

Fig. 4c zeigt die Schaltschiene 104 auf der Ebene des Hauptbetätigungselements 108. Das Hauptbetätigungselement 108 tritt über die Flanke 128 dieses Hauptbetätigungselements 108 infolge entsprechender Rotation dieses Hauptbetätigungselements 108 mit der Kante 130 der Schaltschiene 104 in Kontakt und bewegt die Schaltschiene 104 translatorisch (vgl. Pfeil 124). Die Bewegungsphasen Auslegen und Einlegen erfolgen nach dem bekannten Schema von Active Interlock. Es ist also insbesondere vorgesehen, dass bei einer von seiner Neutralstellung (vgl. Fig. 4c) ausgehenden Bewegung, hier Drehung, des Hauptbetätigungselements 108 zunächst Nebenbetätigungselemente 106 in anderen Ebenen mit dortigen Schaltschienen 104 des gleichen Teilgetriebes derart zusammenwirken, dass - sofern gegeben - eine außerhalb ihrer Neutralstellung positionierte Schaltschiene 104 in ihre Neutralstellung bewegt wird, und diese in anderen Ebene positionierten Schaltschienen 104 mittels dieser Nebenbetätigungselemente 106 über ihre Schaltmäuler 114 in ihrer Neutralstellung gesperrt werden. Bei fortgesetzter Drehung des Hauptbetätigungselements 108 wirkt dieses dann auf die Schaltschiene 104, innerhalb welcher es positioniert ist, so ein, dass diese Schaltschiene 104 in einer ausgerückten Stellung so zu positionieren, dass eine Übersetzungsstufe mittels dieser Schaltschiene 104 eingelegt wird.

Fig. 4d zeigt die Projektion aus den verschiedenen Ebenen von Haupt-108 und Nebenbetätigungselement 106. Beide Elemente 106, 108 rotieren stets synchron und betätigen die Schaltschienen 104 eines Teilgetriebes im Falle der Verwendung in einem Parallelschaltgetriebe (PSG).

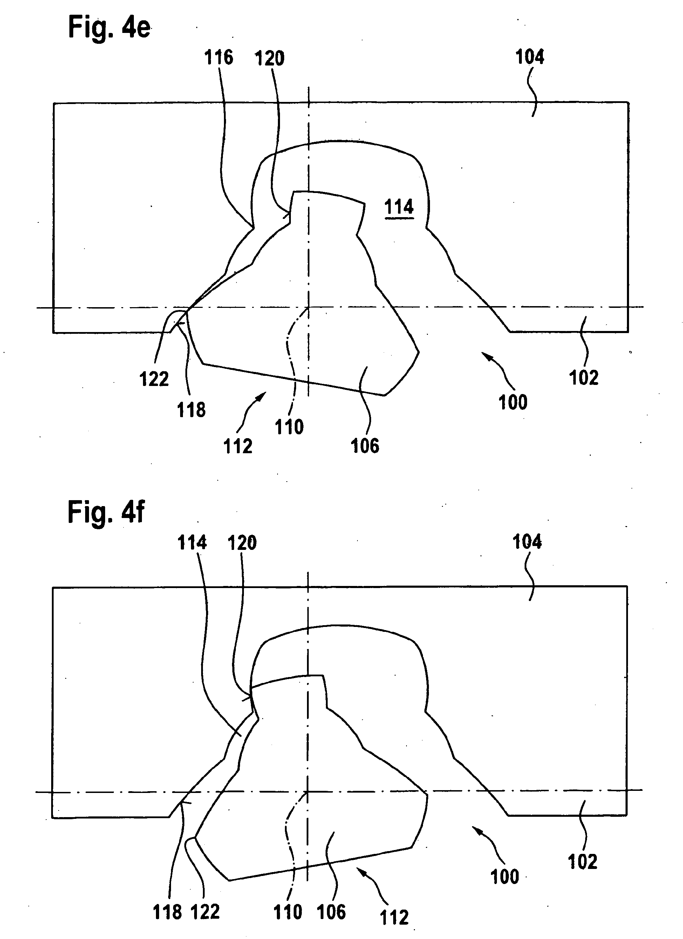

Fig. 4e zeigt das Nebenbetätigungselement 106 bei der Erzeugung einer "gegensinnigen Bewegung" der Schaltschiene 104 mit fortgeschrittenem Drehwinkel. Fig. 4f zeigt zum Vergleich das Nebenbetätigungselement 106 bei der Erzeugung einer "gleichsinnigen Bewegung" der Schaltschiene 104. Die Position der Flanke 118 auf der Höhe der Drehachse 110 des Nebenbetätigungselements 106 in der Stellung gemäß Fig. 4e führt zu der Problematik, dass das Nebenbetätigungselement 106 unter einem sehr schlechten Kraftangriffswinkel mit der Schaltschiene 104 in Kontakt tritt. Das hat zur Folge, dass die resultierende Kraft zur translatorischen Bewegung der Schaltschiene 104 erheblich reduziert wird, was unter ungünstigen Reibungs- bzw. Toleranzsituationen zum Klemmen führen kann. Andererseits wird durch kurzzeitiges Klemmen eine zusätzliche Biegebelastung auf die Schaltschiene 104 ausgeübt.

In der Stellung gemäß Fig. 4f tritt das Nebenbetätigungselement 106 unter einem günstigen bzw. günstigeren Kraftangriffswinkel mit der Schaltschiene 104 in Kontakt. Ein Klemmen beziehungsweise eine Biegebelastung sind bei dem dort wirkenden Kraftangriffswinkel unerheblich.

Aus der DE 102 06 561 A1 der Anmelderin, welche die Merkmale des Oberbegriffs des Anspruchs 1 offenbart, ist eine Getriebeeinrichtung bekannt, bei der Wählen vor dem Auslegen des alten Gangs durchgeführt werden kann bzw. die mit "Active Interlock" versehen ist. Dort wird vorgeschlagen (Fig. 7, Abb. a, b, d, e), das Nebenbetätigungselement als Doppelnocken (Abb. a, d) oder als bzw. mit Vertiefungen (Abb. d, e) auszugestalten. In dieser Neutralstellung sind diese Nebenbetätigungselemente so ausgerichtet, dass sie sich im wesentlichen in Verschiebungsrichtung der Schaltschiene bzw. der Schaltgabel erstrecken. Auch bei diesen Gestaltungen sind die Kraftverhältnisse beim Zurückbewegen der Schaltgabel in ihre Neutralstellung ungünstig. Ferner wird dort (Fig. 7, Abb. c) eine Gestaltung vorgeschlagen, bei der die Nebenbetätigungselemente im Querschnitt rechteckförmig ausgestaltet sind und sich in ihrer Neutralstellung senkrecht zur Verschiebungsrichtung der Schaltgabel erstrecken. Beim Verschieben der Schaltschiene in ihre Neutralstellung kommen diese rechteckförmigen Bereiche des Nebenbetätigungselements mit - quer zur Verschiebungsrichtung der Schaltgabel - oben und unten angeordneten, ebenfalls rechteckförmigen Abschnitten des Schaltmauls in Eingriff. Es hat sich gezeigt, dass die Kraftverhältnisse bei dieser Gestaltung so sind, dass eine recht hohe Verschleißanfälligkeit gegeben ist.

Der Erfindung liegt die Aufgabe zugrunde, eine Getriebeeinrichtung für Kraftfahrzeuge zu schaffen, bei der das Auslegen von Gängen nach dem Wählen erfolgen kann und bei der bei guter Betriebssicherheit günstige Kraftverhältnisse beim Auslegen und ggf. beim Sperren von Gängen gegeben sind.

Erfindungsgemäß wird eine Getriebeeinrichtung gemäß Anspruch1 bzw. eine Baugruppe gemäß Anspruch 10 vorgeschlagen. Bevorzugte Gestaltungen sind Gegenstand der Unteransprüche.

Die erfindungsgemäße Baugruppe kann beispielsweise für ein automatisiertes Schaltgetriebe (ASG) oder für ein Doppelkupplungsgetriebe (DKG) oder für ein Parallelschaltgetriebe (PSG) eingesetzt werden. Diese Verbindungselemente, insbesondere Schaltschienen oder Schaltgabeln, dieser Baugruppe sowie die Betätigungseinrichtung dieser Baugruppe können beispielsweise so ausgebildet sein, wie es im Hinblick auf die Verbindungselemente bzw. die Betätigungseinrichtung der Getriebeeinrichtung erläutert wird. Dies gilt insbesondere auch für das Zusammenwirken von Betätigungseinrichtung und Verbindungselementen. Die erfindungsgemäße Getriebeeinrichtung kann so insbesondere ein ASG, ein DKG oder ein PSG sein bzw. aufweisen. Bei einem Getriebe mit zwei (parallel geschalteten) Antriebstrangzweigen, wie z.B. PSG, wird in aller Regel gefordert, dass in jedem der Antriebsstrangzweige nur ein Gang gleichzeitig eingelegt sein darf. Es kann vorgesehen sein, dass für jeden dieser Antriebsstrangzweige separate Haupt- und Nebenbetätigungselemente vorgesehen sind. Es kann auch vorgesehen sein, dass für beide Antriebsstrangzweige bzw. Teilgetriebe gemeinsame Haupt- und Nebenbetätigungselemente vorgesehen sind.

Im folgenden soll nun ein Ausführungsbeispiel der Erfindung anhand der Figuren 1 bis 3 näher beschrieben werden. Es zeigt:
Fig. 1 eine beispielhafte erfindungsgemäße Anordnung mit einem Nebenbetätigungselement in seiner Neutralstellung und einer teilweise dargestellten Schaltschiene in ihrer Neutralstellung, wobei diese Anordnung Bestandteil einer beispielhaften erfindungsgemäßen Getriebeeinrichtung ist;
Fig. 2 die Anordnung gemäß Fig. 1 bei aus der Neutralstellung ausgerücktem Nebenbetätigungselement und aus der Neutralstellung ausgerückter Schaltschiene;
Fig. 3 eine beispielhafte erfindungsgemäße Anordnung mit teilweise dargestellten Schaltschiene, einer Betätigungswelle, Nebenbetätigungselementen und einem Hauptbetätigungselement, die Bestandteil einer beispielhaften erfindungsgemäßen Getriebeeinrichtung, insbesondere Parallelschaltgetriebe, ist; und
Fig. 4a bis Fig. 4f eine der Anmelderin vorbekannte Gestaltung in verschiedenen Ansichten bzw. Ebenen.

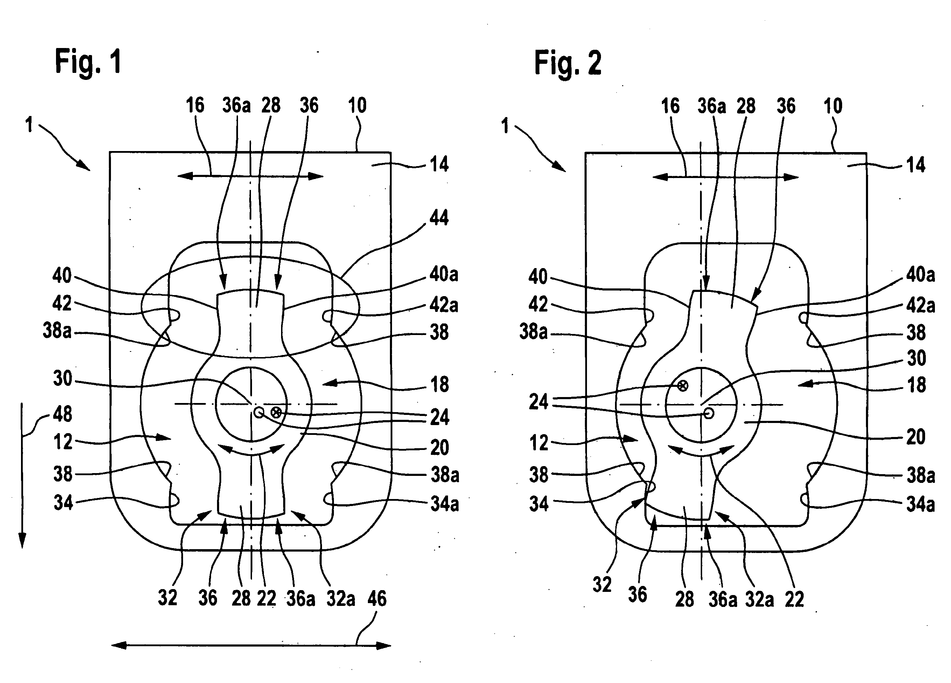

Die Fig. 1 bis 3 zeigen jeweils eine teilweise Ansicht einer beispielhaften erfindungsgemäßen Getriebeeinrichtung 1. Diese Getriebeeinrichtung 1 weist-was in diesen Fig. nicht gezeigt ist - eine Mehrzahl von Übersetzungsstufen bildenden Radsätzen auf. Dabei kann insbesondere vorgesehen sein, dass diese Radsätze, die mittels Rädern, insbesondere Zahnrädern, gebildet werden, jeweils ein Rad aufweisen, das gegenüber seiner tragenden Welle drehbeweglich angeordnet ist und mittels eines Endausgangselements drehfest mit dieser koppelbar ist, um eine Übersetzungsstufe bzw. einen Gang einzulegen. Ein solches Endausgangselement kann beispielsweise eine, insbesondere verschieblich angeordnete, Kupplungsmuffe sein.

Ferner sind mehrere Endausgangsmechanismen vorgesehen. Diesen Endausgangsmechanismen sind dabei jeweils eine oder mehrere der Übersetzungsstufen zugeordnet. Die Zuordnung zwischen Übersetzungsstufen und Endausgangsmechanismus ist dabei so, dass die einem Endausgangsmechanismus zugeordneten Übersetzungsstufen mittels des jeweils betreffenden Endausgangsmechanismus ein- und ausgelegt werden können. Dabei ist insbesondere vorgesehen, dass jede der Übersetzungsstufen lediglich einem der Endausgangsmechanismen zugeordnet ist. Es kann beispielsweise vorgesehen sein, dass einem, mehreren oder allen der Endausgangsmechanismen zwei Übersetzungsstufen zugeordnet sind. Es kann aber auch vorgesehen sein, dass einem oder mehreren Endausgangsmechanismen nur eine Übersetzungsstufe zugeordnet ist. Dies kann beispielsweise der Fall sein, wenn das Getriebe oder - im Falle eines Getriebes, welches mehrere Teilgetriebe aufweist -, ein betreffendes Teilgetriebe eine ungerade Anzahl von Übersetzungsstufen aufweist oder eine ungerade Anzahl von Vorwärtsgänge bildenden Übersetzungsstufen. Es kann vorgesehen sein, dass jeder der Endausgangsmechanismen ein Verbindungselement 10 aufweist, das beispielsweise eine Schaltschiene oder Schaltgabel ist. Im Folgenden wird von "Schaltschiene" gesprochen, wobei anzumerken ist, dass stattdessen auch ein anderes Verbindungselement, wie beispielsweise Schaltgabel, gegeben sein kann. Es kann insbesondere auch vorgesehen sein, dass ein solcher Endausgangsmechanismus ein derartiges Verbindungselement, wie Schaltschiene, aufweist, sowie ein Endausgangselement, wie Kupplungsmuffe. Es kann auch vorgesehen sein, dass die Endausgangsmechanismen jeweils aus einer solchen Schaltschiene 10 sowie einer Kupplungsmuffe bestehen.

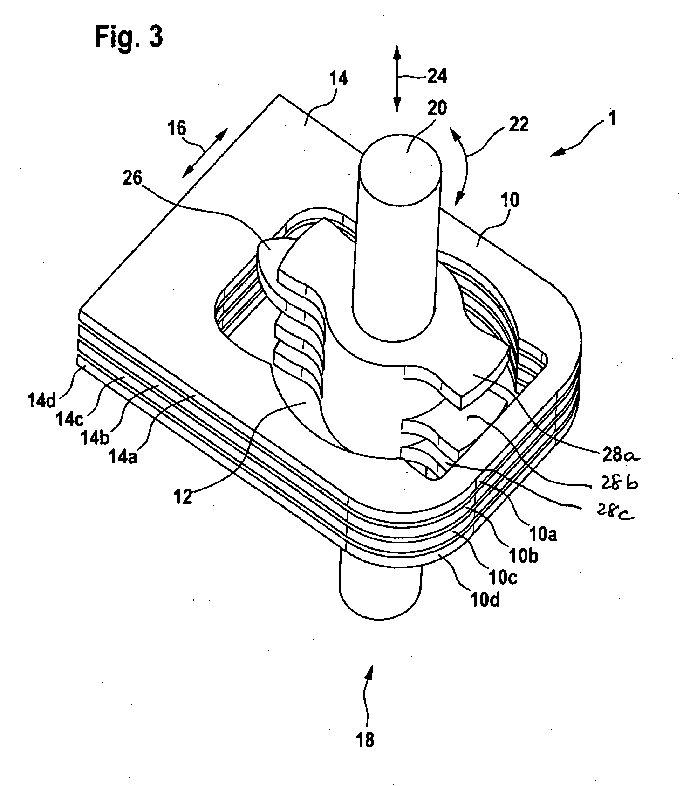

Die bzw. jede Schaltschiene 10 weist einen Ausschnitt bzw. ein Schaltmaul 12 auf. Dieses Schaltmaul 12 ist vorzugsweise, wie in den Fig. gezeigt, geschlossen ausgebildet. Es kann, wie in den Fig. 1 bis 3 gezeigt, an einem Fortsatz 14 der Schaltschiene 10 angeordnet sein. In Fig. 3 sind solche Fortsätze 14 zur besseren Unterscheidbarkeit mit den Bezugszeichen 14a, 14b, 14c und 14d versehen.

Der verbleibende Teil der Schaltschiene 10, der in Fig. 1 bis 3 nicht gezeigt ist, kann sich beispielsweise - in Fig. 1 und Fig. 2 - am oberen Ende des Fortsatzes 14 erstrecken, und zwar insbesondere in Richtung der durch den Pfeil 16 schematisch angedeuteten Bewegungs- bzw. Verschiebungsrichtung der Schaltschiene 10. Die Richtung 16, in der das Verbindungselement bzw. die Schaltschiene 10 beweglich ist, wird auch als Bewegungsrichtung bezeichnet. Wie damit bereits angedeutet ist, sind die jeweiligen Schaltschienen 10 axial verschieblich angeordnet. Durch entsprechende Axialverschiebung einer solchen Schaltschiene 10 kann bewirkt werden, dass eine betreffende, dieser Schaltschiene 10 zugeordnete Übersetzungsstufe ein- bzw. ausgelegt wird. Die Schaltschienen 10 können also jeweils auch so positioniert werden, dass keiner der der betreffenden Schaltschiene 10 zugeordneten Übersetzungsstufen, die auch als Gänge bezeichnet werden können, eingelegt ist. Eine solche Stellung wird auch als "Neutralstellung" der Schaltschiene 10 bezeichnet. Bei Schaltschienen 10, denen zwei Übersetzungsstufen zugeordnet sind, ist insbesondere vorgesehen, dass - ausgehend von der Neutralstellung dieser Schaltschiene 10 - mittels eines Verschiebens dieser Schaltschiene 10 in einer ersten Richtung bzw. Orientierung der Bewegungsrichtung dieser Schaltschiene 10 diese so bewegt werden kann, dass die eine dieser Schaltschiene 10 zugeordnete Übersetzungsstufe eingelegt wird, und in der anderen - entgegengesetzten - Orientierung bzw. Richtung der Bewegungsrichtung, um zu bewirken, dass die andere, dieser Schaltschiene 10 zugeordnete Übersetzungsstufe eingelegt wird.

Für die entsprechende Betätigung der Endausgangsmechanismen bzw. Schaltschienen 10, also insbesondere zum Ein- und Auslegen von Übersetzungsstufen, ist eine Betätigungseinrichtung 18 vorgesehen.

Diese Betätigungseinrichtung18 weist eine Betätigungswelle 20 auf, die -wie durch den Doppelpfeil 22 angedeutet ist - dreh- bzw. schwenkbeweglich angeordnet ist. Ferner ist diese Betätigungswelle 20 axialbeweglich angeordnet, wie schematisch durch den Pfeil 24 angedeutet ist.

An dieser Betätigungswelle 20 ist zumindest ein Hauptbetätigungselement 26 sowie wenigstens ein Nebenbetätigungselement 28 vorgesehen. In Fig. 3 sind mehrere Nebenbetätigungselemente 28 vorgesehen, die zum Zwecke der besseren Unterscheidbarkeit mit dem Bezugszeichen 28a, 28b und 28c versehen sind.

Die Betätigungseinrichtung 18 kann - was in den Fig. 1 bis 3 nicht gezeigt ist - weitere Bauteile aufweisen. So kann beispielsweise vorgesehen sein, dass die Betätigungseinrichtung zwei Elektromotoren aufweist, mittels welchen die Betätigungswelle 20 direkt oder über zwischengeschaltete Elemente angetrieben werden kann. Dies kann beispielsweise so sein, dass ein erster Elektromotor vorgesehen ist, mittels welchem die Betätigungswelle 20 in ihrer Axialrichtung 24 bewegt werden kann sowie ein weiterer Elektromotor, mittels welchem die Betätigungswelle 20 in ihrer Schwenk- bzw. Drehrichtung bewegt werden kann. Da die Bewegung in Axialrichtung 24 der Betätigungswelle 20 insbesondere - wie noch erläutert wird - dem Wählen dient, kann ein diese Bewegung erzeugender Elektromotor auch als Wählmotor bezeichnet werden. Da über ein Verdrehen bzw. Verschwenken der Betätigungswelle 20 Übersetzungsstufen ein- bzw. ausgelegt werden können, kann ein die entsprechende Dreh- bzw. Schwenkbewegung der Betätigungswelle 20 erzeugender Elektromotor auch als Schaltmotor bezeichnet werden. Weiter kann vorgesehen sein, dass solche Elektromotoren mittels eines elektronischen Steuergeräts ansteuerbar sind bzw. angesteuert werden.

Das Hauptbetätigungselement 26 sowie die Nebenbetätigungselemente 28 bzw. 28a, 28b, 28c sind jeweils fest an der Betätigungswelle 20 angeordnet. Wenn also die Betätigungswelle axial verlagert wird (Pfeil 24), werden die Nebenbetätigungselemente 28 sowie das Hauptbetätigungselement 26 mit verlagert. In entsprechender Weise wird das Hauptbetätigungselement 26 sowie die Nebenbetätigungselemente 28 mitgedreht bzw. geschwenkt, wenn die Betätigungswelle 20 gedreht bzw. geschwenkt wird (Pfeil 22). Die Schaltschienen 10, die in Fig. 3 zur besseren Unterscheidbarkeit mit den Bezugszeichen 10a, 10b, 10c und 10d versehen sind, bzw. deren jeweiligen Fortsätze 14 sind im wesentlichen nebeneinander und parallel zueinander angeordnet. Dabei ist insbesondere vorgesehen, dass dann, wenn alle Schaltschienen 10 in ihrer Neutralstellung positioniert sind, also sämtliche Übersetzungsstufen des betreffenden Getriebes bzw. Teilgetriebes ausgelegt sind, die Schaltmäuler 12 dieser Schaltschienen 10 miteinander fluchten (vgl. Fig. 3).

Das Einlegen von Übersetzungsstufen erfolgt - insbesondere ausschließlich - mittels des bzw. eines Hauptbetätigungselements 26, das insbesondere als Schaltfinger gestaltet ist; das Auslegen von Übersetzungsstufen erfolgt mittels der bzw. jeweils bestimmter Nebenbetätigungselemente 28. Wenn mittels des Hauptbetätigungselementes 26 eine Übersetzungsstufe, auch als Gang bezeichnet, eingelegt werden soll bzw. eingelegt wird, wird mittels der Nebenbetätigungselemente sichergestellt, dass sämtliche verbleibenden Übersetzungsstufen bzw. Gänge des gleichen Getriebes bzw. - sofern mehrere Teilgetriebe gegeben sind - des gleichen Teilgetriebes ausgelegt sind, bevor die Zielübersetzungsstufe mittels des Hauptbetätigungselements 26 eingelegt wird bzw. ist. Im Folgenden soll noch einmal genauer erläutert werden, wie das so genannte "Schalten" bzw. das Einlegen von Übersetzungsstufen und das Auslegen von Übersetzungsstufen im Ausführungsbeispiel funktioniert. Ferner soll erläutert werden, wie das so genannte "Wählen" beim Ausführungsbeispiel funktioniert:

Zum Wählen wird die Betätigungswelle 20 axial verschoben. Dies erfolgt insbesondere bei einer Stellung, bei der das Hauptbetätigungselement 26, im Folgenden als Schaltfinger 26 bezeichnet, derart axial bewegt werden kann, dass es nicht durch Schaltschienen bzw. eine der Schaltschienen an seiner Axialbewegung gehindert werden kann. Eine solche Stellung wird insbesondere auch als Neutralstellung (des Schaltfingers 26) bezeichnet. Durch diese Axialbewegung der Betätigungswelle 20 bzw. des Schaltfingers 26 kann der Schaltfinger 26 so positioniert werden, dass er in einer anschließenden Schaltbewegung bzw. Drehbewegung auf einen Endausgangsmechanismus bzw. eine vorbestimmte Schaltschiene 10 einwirken kann, um das Einlegen eines diesem Endausgangsmechanismus bzw. dieser Schaltschiene 10 zugeordneten Gangs zu bewirken.

Zum Einlegen eines Ganges wird nach dem "Wählen" die Betätigungswelle 20 gedreht bzw. geschwenkt (Pfeil 22). Die Richtung bzw. Orientierung dieser Dreh- bzw. Schwenkbewegung hängt davon ab, welcher der der betreffenden Schaltschiene bzw. dem betreffenden Endausgangsmechanismus zugeordneten Gänge eingelegt werden soll. Zu Beginn dieser sich an das "Wählen" anschließenden Schwenkbewegung überwindet der Schaltfinger 26 einen gewissen Leerhub. Dieser Leerhub ist insbesondere so, dass der Schaltfinger 26 während dieses Leerhubs noch nicht kontaktierend in die betreffende Schaltschiene 10 eingreift bzw. diese Schaltschiene 10 noch nicht in ihre Gangstellung bewegt. Sofern der alte Gang derselben Schaltschiene 10 zugeordnet ist wie der Zielgang, kann auch vorgesehen sein, dass der Schaltfinger 26 bereits während seines Leerhubs die betreffende Schaltschiene kontaktiert. Dies kann insbesondere so sein, dass der Schaltfinger 26, ausgehend von seiner Neutralstellung, in der Richtung geschwenkt wird, in welche er geschwenkt werden muss, um das Einlegen des Zielganges zu bewirken, wobei während des Leerhubs der Schaltfinger 26 bereits in Kontakt mit der Schaltschiene 10 tritt und während dieses Leerhubs diese Schaltschiene 10 zunächst in ihre Neutralstellung zurückbewegt. Bei derartigen Schwenkbewegungen des Schaltfingers 26 werden die Nebenbetätigungselemente 28 mitbewegt, da sie ebenfalls an der Betätigungswelle 20 fest angeordnet sind. Die Nebenbetätigungselemente 28 sind dabei in zum Schaltfinger 26 versetzten Ebenen positioniert. Dabei ist insbesondere vorgesehen, dass die Nebenbetätigungselemente 28 in ihrer jeweiligen Neutralstellung sind, wenn der Schaltfinger 26 in seiner Neutralstellung ist. Während einer Bewegung des Schaltfingers 26 in Drehrichtung werden also die Nebenbetätigungselemente 28 in versetzten Ebenen bewegt. Zum bzw. beim Auslegen eines (alten) Ganges mittels einer Schaltschiene10, die von der Schaltschiene 10, welcher der Zielgang zugeordnet ist, verschieden ist und die dem gleichen Getriebe bzw. - im Falle mehrerer Teilgetriebe - dem gleichen Teilgetriebe zugeordnet ist, wirkt ein Nebenbetätigungselement 28 während des Leerhubs des Schaltfingers 26 auf die betreffende Schaltschiene 10 derart, dass während dieses Leerhubs des Schaltfingers 26 die entsprechende Übersetzungsstufe (alter Gang) mittels des Nebenbetätigungselements 28 ausgelegt wird. Es wird also - insbesondere mittels der Nebenbetätigungselemente 28 - stets sichergestellt, dass sämtliche Gänge des Getriebes - bzw., sofern mehrere Teilgetriebe gegeben sind, des jeweils gleichen Teilgetriebes - ausgelegt sind, bevor ein Zielgang eingelegt wird bzw. ist. Es ist also insbesondere vorgesehen, dass dann, wenn der Schaltfinger 26 aus seiner Neutralstellung bewegt wird, während des Leerhubs dieses Schaltfingers 26 mittels der Nebenbetätigungselemente 28 sichergestellt wird, dass sämtliche bzw. eine aus ihrer Neutralstellung ausgelenkte Schaltschiene 10 des gleichen Getriebes bzw. Teilgetriebes in ihre Neutralstellung bewegt wird, wobei die Nebenbetätigungselemente 28 in anderen Ebenen wirken als der Schaltfinger 26. Zum Auslegen entsprechender Übersetzungsstufen mittels der Nebenbetätigungselemente 28 wirkt ein entsprechender Funktionsbereich eines solchen Nebenbetätigungselements 28 auf einen Funktionsbereich eines entsprechenden Schaltmauls 12.

Dies soll anhand der Fig. 1 und 2 näher erläutert werden. Während in Fig. 1 sowohl das Nebenbetätigungselement 28 als auch die dortige Schaltschiene 10 in ihrer Neutralstellung gezeigt sind, ist in der Stellung gemäß Fig. 2 die Schaltschiene 10 aus ihrer Neutrallage ausgerückt, und zwar nach rechts. Dies kann gut anhand der relativ zur Schaltschiene 10 unterschiedlichen Lagen der Drehachse 30 der Betätigungswelle 20 in Fig. 1 und 2 erkannt werden. In Fig. 2 ist ferner die Betätigungswelle 20 gegenüber ihrer Neutrallage im Uhrzeigersinn verschwenkt. Da der Schaltfinger 26 fest an der Betätigungswelle 20 angeordnet ist, ist dieser entsprechend verschwenkt. Wie Fig. 2 gut entnommen werden kann, kontaktiert ein Funktionsbereich 32 des Nebenbetätigungselements 28 einen Funktionsbereich 34 des Schaltmauls 12.

Funktionsbereiche des Nebenbetätigungselements 28 bzw. des Schaltmauls 12 sind insbesondere jeweils Oberflächenbereiche, die einer bestimmten Funktion dienen, und zwar insbesondere im Zusammenwirken mit entsprechenden Oberflächenbereichen des jeweils anderen Elements 12 bzw. 28. In dem Ausführungsbeispiel weisen das Schaltmaul 12 sowie das Nebenbetätigungselement 28 jeweils Funktionsbereiche für die gleichförmige Bewegung, Funktionsbereiche für die gegensinnige Bewegung sowie Funktionsbereiche für das Sperren auf.

Funktionsbereiche 36, 36a des Nebenbetätigungselements 28 für das Sperren kontaktieren dabei Funktionsbereiche 38 bzw. 38a für das Sperren des Schaltmauls 12, wenn mittels des Nebenbetätigungselements 28 das Schaltmaul 12 bzw. dessen Schaltschiene 10 in einer gesperrten Stellung ist. Eine solche gesperrte Stellung stellt insbesondere sicher, dass die betreffende Schaltschiene 10 nicht (ungewollt) so bewegt werden kann, dass mittels dieser Schaltschiene 10 eine Übersetzungsstufe eingelegt wird. Dies kann beispielsweise so sein, dass hierdurch verhindert wird, dass eine Übersetzungsstufe -je nach konkreter Bauart - in Mitnahme oder Vibration oder auf sonstige Weise ungewollt eingelegt wird. Es ist insbesondere vorgesehen, dass - abgesehen von der Schaltschiene 10 des jeweiligen Zielgangs - sämtliche Schaltschienen 10 des Getriebes bzw. - im Falle mehrerer Teilgetriebe - desselben Teilgetriebes mittels der Nebenbetätigungselemente 28 gesperrt sind bzw. werden, bevor der Zielgang eingelegt ist bzw. wird. Dabei ist insbesondere vorgesehen, dass sich das "Sperren" an des "Auslegen" bzw. an eine Bewegung, die das Auslegen sicherstellen soll, anschließt.

Ein Funktionsbereich bzw. Funktionsbereiche des Nebenbetätigungselements 28 für eine gleichsinnige Bewegung sind solche, die mit einem Funktionsbereich bzw. Funktionsbereichen des Schaltmauls 12 für eine gleichsinnige Bewegung kontaktierend zusammenwirken, wenn bzw. damit die Schaltschiene 10 gleichsinnig bewegt wird. In entsprechender Weise sind Funktionsbereiche des Nebenbetätigungselements 28 für eine gegensinnige Bewegung solche, die mit einem bzw. mit Funktionsbereichen des Schaltmauls 12 für eine gegensinnige Bewegung kontaktierend zusammenwirken, wenn bzw. damit die Schaltschiene 10 gegensinnig bewirkt wird.

Die "gleichsinnige" bzw. "gegensinnige" Bewegung der betreffenden Schaltschiene 10 ist dabei im Vergleich zu der Schaltschiene 10 zu sehen, welche bei fortgesetzter Bewegung der Betätigungswelle 20 mittels des Schaltfingers 26 bewegt wird.

Dies wird gut anhand der Fig. 1 bis 3 deutlich. Wie Fig. 1 entnommen werden kann, ist das Schaltmaul 12 bezüglich einer durch die Bewegungsrichtung 16 der Schaltschiene 10 sowie die Drehachse 30 der Betätigungswelle 20 aufgespannten Ebene asymmetrisch ausgebildet. Diese Asymmetrie ist hier so, dass das auf der einen Seite dieser Ebene gelegene - hier obere - Ende des Schaltmauls 12 weiter von der Ebene entfernt ist als das auf der anderen - hier unteren - gelegene Ende des Schaltmauls 12. Wie gut Fig. 3 entnommen werden kann, wird der somit oben gegebene zusätzliche Freiraum dafür benutzt, dass hier der Schaltfinger 26 bewegt werden kann, der sich in radialer Richtung weiter von der Drehachse 30 erstreckt als das Nebenbetätigungselement 28. Die Erstreckungsrichtung des Schaltfingers 26 in radialer Richtung entspricht dabei im wesentlichen der Erstreckungsrichtung des Nebenbetätigungselements. Das Nebenbetätigungselement 28 ist in diesem Ausführungsbeispiel allerdings - im Gegensatz zum Schaltfinger 26 - als Doppelnocken ausgebildet, und ragt somit in den beiden entgegengesetzten Orientierungen einer radialen Richtung der Betätigungswelle 20 ab, während der Schaltfinger 26 nur in einer Orientierung dieser radialen Richtung abragt.

Bezogen auf Fig. 2 ist also in der dortigen Schwenkstellung des Nebenbetätigungselements 28 der Schaltfinger 26 entsprechend dem oberen Teil-Doppelnocken des Nebenbetätigungselements 28 verschwenkt, und zwar in einer versetzten Ebene. Dies ist so, dass der Schaltfinger 26 in dieser versetzten - in Fig. 2 nicht gezeigten - Ebene nach entsprechend weitem Schwenken eine parallel angeordnete Schaltschiene 10 (dort) nach rechts verschiebt. In der Ebene gemäß Fig. 2 verschiebt das Nebenbetätigungselement 28 über die Funktionsbereiche 32, 34 die dortige Schaltschiene 10 nach links. Bei dieser Bewegung werden also die beiden angesprochenen Schaltschienen 10 gegensinnig bewegt, so dass diese Funktionsbereiche 32, 34 für eine gegensinnige Bewegung sind. In entsprechender Weise sind die Funktionsbereiche 32a des Nebenbetätigungselements 28 bzw. die Funktionsbereiche 34a der Schaltmäuler 12 ebenfalls Funktionsbereiche für eine gegensinnige Bewegung und die Funktionsbereiche 40, 40a des Nebenbetätigungselements 28 bzw. die Funktionsbereiche 42, 42a des Schaltmauls 12 Funktionsbereiche für eine gleichsinnige Bewegung.

Dabei ist insbesondere vorgesehen, dass - insbesondere wahlweise - die Funktionsbereiche 32 mit den Funktionsbereichen 34, die Funktionsbereiche 32a mit den Funktionsbereichen 34a, die Funktionsbereiche 40 mit den Funktionsbereichen 42 und die Funktionsbereiche 40a mit den Funktionsbereichen 42a zusammenwirken können bzw. einander kontaktieren können. Bei diesem Kontaktieren kann insbesondere vorgesehen sein, dass während der Bewegung eine Art Abwälzen jeweils einander zugeordneter Funktionsbereiche gegeben ist. Wie deutlich Fig. 1 und 2 entnommen werden kann, sind die Funktionsbereiche 32, 34 bzw. 32a, 34a für die gegensinnige Bewegung sowie die Funktionsbereiche 40, 42, 40a, 42a für die gleichsinnige Bewegung jeweils uneben - in diesem Ausführungsbeispiel gekrümmt bzw. gewölbt - ausgebildet. Diese Funktionsbereiche für die gleich- bzw. gegensinnige Bewegung sind dabei am Nebenbetätigungselement konvex gekrümmt und am Schaltmaul konkav gekrümmt. Es kann insbesondere vorgesehen sein, dass diese Funktionsbereiche nach Art von Evolventen bzw. Zykloiden ausgebildet sind. Die Funktionsbereiche 36, 36a des Nebenbetätigungselements 28 für das Sperren, die hier das Nebenbetätigungselement 28 nach radial außen begrenzen, sind in diesem Ausführungsbeispiel zylindersegmentartig bzw. kreissegmentartig geformt. Dabei ist insbesondere vorgesehen, dass der Radius dieser Segmente im wesentlichen dem Radius der kreis- bzw. zylindersegmentartigen Abschnitte des Schaltmauls 12 entspricht, die die Funktionsbereiche 38,38a des Schaltmauls 12 für das Sperren aufweisen.

Es ist im Ausführungsbeispiel insbesondere vorgesehen, dass für die Drehung bzw. das Schwenken der Betätigungswelle 20 im Uhrzeigersinn, einerseits, und für die Drehung der Betätigungswelle 20 im Gegenuhrzeigersinn, andererseits, jeweils Funktionsbereiche für eine gleichsinnige und Funktionsbereiche für eine gegensinnige Bewegung vorgesehen sind.

Wie Fig. 1 entnommen werden kann, in welcher das Nebenbetätigungselement 28 in seiner Neutralstellung gezeigt ist, in der es sich im wesentlichen senkrecht zur Bewegungsrichtung 16 der Schaltschiene 10 erstreckt, sind in dieser Neutralstellung die Funktionsbereiche 40, 40a (des Nebenbetätigungselements 28) für die gleichsinnige Bewegung bezüglich der bereits angesprochenen Ebene, die durch die Bewegungsrichtung 16 der Schaltschienen 10 sowie die im wesentlichen senkrecht hierzu gelegene Drehachse 30 der Betätigungswelle 20 aufgespannt wird, (spiegel)symmetrisch zu den Funktionsbereichen 32, 32a des Nebenbetätigungselements 28 für die gegensinnige Bewegung ausgebildet. Ferner kann Fig.1 entnommen werden, dass die Funktionsbereiche 42, 42a des Schaltmauls 12 für die gleichsinnige Bewegung - bezüglich der genannten Ebene - (spiegel)symmetrisch zu den Funktionsbereichen 34, 34a (des Schaltmauls 12) für die gegensinnige Bewegung sind.

Wenn mittels des Schaltfingers 26 ein Gang eingelegt wurde bzw. eine Schaltschiene 10 so verschoben wurde, dass ein Gang eingelegt wurde, kann dieser Schaltfinger 26 zurück in seine Mittel- bzw. Neutralstellung bewegt werden, ohne dass dieser Gang bzw. Übersetzungsstufe dabei wieder ausgelegt wird.

In Fig. 1 ist also insbesondere eine verbesserte Schaltmaulausführung sowie das dazugehörige Nebenbetätigungselement (beide in Schaltstellung "neutral") gezeigt, welches den Mangel des ungünstigen Kraftangriffswinkels, der insbesondere in der Gestaltung gemäß der in Fig. 4a bis 4f gegeben ist, für das Nebenbetätigungselement vermindert bzw. aufhebt.

Es ist also mit diesem Ausführungsbeispiel insbesondere vorgesehen, dass der Bereich 44, welcher für die Erzeugung einer "gleichsinnigen" Bewegung verwendet wird, um die Mittelebene der Betätigungswelle bzw. Drehwelle 20 gespiegelt wird. Dadurch ergibt sich (in diesem Ausführungsbeispiel) eine Schaltschiene mit einem geschlossenen Schaltmaul 12. Der nun wirkende Kraftangriffswinkel für die Erzeugung der "gegensinnigen Bewegung" ist identisch mit dem Kraftangriffswinkel für die Erzeugung der "gleichsinnigen Bewegung". In Fig. 2 ist insbesondere das Nebenbetätigungselement in der Mitte der Bewegungsphase "Auslegen" mit "gegensinniger Bewegung" gezeigt. Fig. 3 zeigt insbesondere eine Gesamtanordnung für die Schaltschienen eines PSG-Getriebes und die dazugehörigen Haupt- und Nebenbetätigungselemente.

Als vorteilhaft bei dieser - im Ausführungsbeispiel dargestellten - Schaltschienenausführung erweist sich, dass die Schaltmaulbreite 46 schmaler als bei der bekannten Ausführung gemäß den Fig. 4a bis 4f ist (vgl. dort Bezugszeichen 132). Dafür muss nur wenig mehr an Gesamthöhe (vgl. Bezugszeichen 48) im Bereich des geschlossenen Schaltmauls in Kauf genommen werden. Insgesamt ergibt sich ein robusteres Schaltmaul mit besserer Wirkung. Gemäß dem Ausführungsbeispiel ist also die bekannte Ausführung des Active Interlock-Schaltmauls für Betätigungs- bzw. Drehwellenbetätigung so modifiziert, dass der Krafteingriffswinkel bei gegensinniger Bewegung des Nebenbetätigungselements verbessert ist. Es wird also insbesondere ein robustes Active Interlock-Schaltmaul für eine verbesserte bzw. optimale Wirkung beim Auslegen der Gänge, unabhängig von der Drehrichtung des Nebenbetätigungselements, geschaffen.

Gegenüber den aus Fig. 7, Abb. a, b, d und e der DE 102 06 561 A1 bekannten Gestaltungen weist die anhand der Fig. 1 bis 3 erläuterte beispielhafte erfindungsgemäße Gestaltung den Vorteil auf, dass die Kraftverhältnisse beim Zurückbewegen der Schaltgabel bzw. Schaltschiene verbessert sind. Es sind bei der beispielhaften erfindungsgemäßen Gestaltung insbesondere verbesserte Kraftangriffswinkel zwischen Nebenbetätigungselement und Schaltmaul bzw. Schaltschiene gegeben. So wird insbesondere bei gleichem Drehmoment eine größere Kraft in Bewegungsrichtung der Schaltschienen auf diese aufgebracht, und zwar insbesondere zu Beginn der Auslegephase.

Weiter werd - auch gegenüber der in Abb. c der genannten Fig. 7 gezeigten Gestaltung - ermöglicht, dadurch, dass sowohl die Funktionsbereiche für die gleich- und gegensinnige Bewegung am Nebenbetätigungselement uneben bzw. gekrümmt ausgebildet sind, als auch die Funktionsbereiche des Schaltmauls bzw. der Schaltschiene, ermöglicht, günstigere Bewegungs- bzw. Kraftverhältnisse zu schaffen. Vorteilhaft gegenüber den Gestaltungen gemäß der genannten Fig. 7 ist ferner ist, dass die Funktionsbereiche für die gleich- bzw. gegensinnige Bewegung in der erwähnten Weise zwar spiegelsymmetrisch am Schaltmaul bezüglich der genannten Ebene angeordnet bzw. gestaltet sind, das Schaltmaul - in seiner Gesamtheit betrachtet - allerdings nicht spiegelsymmetrisch bezüglich dieser Ebene ausgebildet ist. Hierdurch wird nämlich eine platzsparende Ausbildung des Schaltmauls ermöglicht, bei der sowohl das Hauptbetätigungselement als auch das wenigstens eine Nebenbetätigungselement - wahlweise - auf das jeweils selbe Schaltmaul betätigend einwirken kann.

Gegenüber der Gestaltung gemäß Abb. c der genannten Fig. 7 weist die Gestaltung gemäß dem anhand der Fig. erläuterten Ausführungsbeispiel der Erfindung weiter den Vorteil der geringeren Verschleißanfälligkeit auf, die bei der Gestaltung gemäß Abb. c insbesondere an der Ecken der Rechteckkonturen gegeben ist. Weiter wird - was auch mit dem vorgenannten Aspekt verknüpft sein kann - ermöglicht die Flächenpressung im Kontaktbereich zu reduzieren.

### Bezugszeichenliste

- 1: Getriebeeinrichtung
- 10: Verbindungselement, Schaltschiene
- 10a: Verbindungselement, Schaltschiene
- 10b: Verbindungselement, Schaltschiene
- 10c: Verbindungselement, Schaltschiene
- 10d: Verbindungselement, Schaltschiene
- 12: Schaltmaul
- 14: Fortsatz
- 16: Pfeil
- 18: Betätigungseinrichtung
- 20: Betätigungswelle
- 22: Doppelpfeil in Schwenkrichtung von 20
- 24: Doppelpfeil in Axialbewegungsrichtung von 20
- 26: Hauptbetätigungselement
- 28: Nebenbetätigungselement
- 28a: Nebenbetätigungselement
- 28b: Nebenbetätigungselement
- 28c: Nebenbetätigungselement
- 30: Drehachse von 20
- 32: Funktionsbereich von 28 für gegensinnige Bewegung
- 32a: Funktionsbereich von 28 für gegensinnige Bewegung
- 34: Funktionsbereich von 12 für gegensinnige Bewegung
- 34a: Funktionsbereich von 12 für gegensinnige Bewegung
- 36: Funktionsbereich von 28 für Sperren
- 36a: Funktionsbereich von 28 für Sperren
- 38: Funktionsbereich von 12 für Sperren
- 38a: Funktionsbereich von 12 für Sperren
- 40: Funktionsbereich von 28 für gleichsinnige Bewegung
- 40a: Funktionsbereich von 28 für gleichsinnige Bewegung
- 42: Funktionsbereich von 12 für gleichsinnige Bewegung
- 42a: Funktionsbereich von 12 für gleichsinnige Bewegung
- 44: Bereich
- 46: Schaltmaulbreite
- 48: Gesamthöhe
- 100: Getriebeeinrichtung
- 102: Endbetätigungsmechanismus
- 104: Schaltschiene
- 106: Nebenbetätigungselement
- 108: Hauptbetätigungselement
- 110: Achse
- 112: Betätigungswelle
- 114: Schaltmaul
- 116: Kante von 114
- 118: Flanke von 114
- 120: Flanke von 106
- 122: Kante von 106
- 124: Pfeil (Bewegungsrichtung von 104)
- 128: Flanke von 108
- 130: Kante von 104
- 132: Schaltmaulbreite

## Patentansprüche

1. Getriebeeinrichtung für ein Kraftfahrzeug, die eine Mehrzahl von Übersetzungsstufen bildenden Radsätzen aufweist, sowie mehrere axialbeweglich angeordnete und jeweils mit einem Schaltmaul (12) versehene Verbindungselemente (10), wie Schaltschienen oder Schaltgabeln, und die weiter zum Betätigen der Verbindungselemente (10) eine Betätigungseinrichtung (18) mit einer dreh- bzw. schwenk- und axialbeweglich gelagerten Betätigungswelle (20) aufweist, an welcher für das Einwirken auf Verbindungselemente (10) zum Einlegen von Übersetzungsstufen wenigstens ein Hauptbetätigungselement (26), insbesondere Schaltfinger, vorgesehen ist, und an welcher für das Einwirken auf Verbindungselemente (10) zum Auslegen und / oder Sperren von Übersetzungsstufen wenigstens ein Nebenbetätigungselement (28) vorgesehen ist, wobei das wenigstens eine Nebenbetätigungselement (28) Funktionsbereiche (40, 40a) für eine gleichsinnige Bewegung sowie Funktionsbereiche (32, 32a) für eine gegensinnige Bewegung aufweist und wobei das jeweilige Schaltmaul (12) Funktionsbereiche (42, 42a) für eine gleichsinnige Bewegung sowie Funktionsbereiche (34, 34a) für eine gegensinnige Bewegung aufweist wobei die gleichsinnige bzw. gegensinnige Bewegung des betreffenden Verbindungselements (10) im Vergleich zu dem Verbindungselement (10) zu sehen ist, welches bei fortgesetzter Bewegung der Betätigungswelle (20) mittels des Hauptbetätigungselements (26) bewegt wird, wobei sich das wenigstens eine Nebenbetätigungselement (28) in seiner Neutralstellung im Wesentlichen quer, insbesondere senkrecht, zur Bewegungs- bzw. Axialrichtung (16) der Verbindungselemente (10) erstreckt, und wobei bezogen auf diese Neutralstellung an dem wenigstens einen Nebenbetätigungselement (28) und an wenigstens einem Schaltmaul (12) die jeweiligen Funktionsbereiche (40, 40a bzw. 42, 42a) für die gleichsinnige Bewegung spiegelsymmetrisch zu den jeweiligen, am jeweils gleichen Element (28 bzw. 12) vorgesehenen Funktionsbereichen (32, 32a bzw. 34, 34a) für die gegensinnige Bewegung sind, und zwar bezüglich einer Ebene, die durch die Drehachse (30) der Betätigungswelle (20) und die Bewegungs- bzw. Axialrichtung (16) des Verbindungselements (10) definiert ist, **dadurch gekennzeichnet, dass** dieses wenigstens eine Schaltmaul (12) und das wenigstens eine Nebenbetätigungselement (28) im Bereich der jeweiligen Funktionsbereiche (32, 32a, 34, 34a, 40, 40a, 42, 42a) für die gleichsinnige und für die gegensinnige Bewegung jeweils uneben, insbesondere gekrümmt, ausgebildet ist.

2. Getriebeeinrichtung, nach Anspruch 1, **dadurch gekennzeichnet, dass** dieses wenigstens eine Schaltmaul (12) bezüglich dieser Ebene asymmetrisch gestaltet ist.

3. Getriebeeinrichtung nach einem der vorangehenden Ansprüche, **dadurch gekennzeichnet, dass** sich auch das wenigstens eine Hauptbetätigungselement (26) in seiner Neutralstellung im Wesentlichen quer, insbesondere im Wesentlichen senkrecht, zur Bewegungs- bzw. Axialrichtung (16) des Verbindungselements (10) erstreckt.

4. Getriebeeinrichtung nach einem der vorangehenden Ansprüche, **dadurch gekennzeichnet, dass** Funktionsbereiche (32, 32a, 34, 34a, 40, 40a, 42, 42a) des wenigstens einen Nebenbetätigungselements (28) und / oder des wenigstens einen Schaltmauls (12) nach Art von Zykloiden und / oder Evolventen ausgebildet sind, oder einen oder mehrere entsprechend gestaltete Abschnitte aufweisen.

5. Getriebeeinrichtung nach einem der vorangehenden Ansprüche, **dadurch gekennzeichnet, dass** die Schaltmäuler (12) geschlossen ausgebildet sind.

6. Getriebeeinrichtung nach einem der vorangehenden Ansprüche, **dadurch gekennzeichnet, dass** das wenigstens eine Nebenbetätigungselement (28) und / oder das Hauptbetätigungselement (26) einen Durchbruch aufweist, durch welchen sich die Betätigungswelle (20) erstreckt, die das wenigstens eine Nebenbetätigungselement (28) und das Hauptbetätigungselement (26) trägt.

7. Getriebeeinrichtung nach einem der vorangehenden Ansprüche, **dadurch gekennzeichnet, dass** das jeweilige Verbindungselement (10) ein gemeinsames Schaltmaul (12) für den wahlweisen Eingriff eines Hauptbetätigungselements (26) und wenigstens eines Nebenbetätigungselements (28) aufweist.

8. Getriebeeinrichtung nach einem der vorangehenden Ansprüche, **dadurch gekennzeichnet, dass** das wenigstens eine Schaltmaul (12) und das wenigstens eine Nebenbetätigungselement (28) jeweils zumindest in denjenigen Bereichen ihrer Funktionsbereiche ((32, 32a, 34, 34a, 40, 40a, 42, 42a) für die gleichsinnige und für die gegensinnige Bewegung uneben, insbesondere gekrümmt, ausgebildet sind, die jeweils während einer mittels eines Nebenbetätigungselements (28) bewirkten Bewegung des Verbindungselements (10), die in Richtung der Neutralstellung des Verbindungselements (10) gerichtet ist, einander kontaktieren.

9. Getriebeeinrichtung nach einem der vorangehenden Ansprüche, **dadurch gekennzeichnet, dass** die Schaltmäuler (12) und das wenigstens eine Nebenbetätigungselement (28) jeweils Funktionsbereiche (36, 36a bzw. 38, 38a) für das Sperren aufweisen, wobei in einer Neutralstellung des Nebenbetätigungselements (28) diese Funktionsbereiche (36, 36a) des Nebenbetätigungselements (28) bezüglich der durch die Drehachse (30) der Betätigungswelle (20) und die Bewegungs- bzw. Axialrichtung (16) des Verbindungselements (10) definierte Ebene spiegelsymmetrisch sind, und wobei diese Funktionsbereiche (38, 38a) des jeweiligen Schaltmauls (12) bezüglich dieser Ebene spiegelsymmetrisch sind.

10. Baugruppe, welche aus mehreren Verbindungselementen (10) und aus einer Betätigungseinrichtung (18) zum Betätigen dieser Verbindungselemente (10) besteht, für eine Getriebeeinrichtung (1) gemäß einem der vorangehenden Ansprüche.

## Claims

1. Transmission device for a motor vehicle, which transmission device has a multiplicity of gear sets which form transmission stages, and which transmission device also has a plurality of axially movable connecting elements (10), such as shift rails or shift forks, which are provided in each case with a shift mouth (12), and which transmission device also has, for actuating the connecting elements (10), an actuating device (18) with an actuating shaft (20) which is mounted in a rotationally or pivotably and axially movable fashion and on which actuating shaft (20) is provided at least one main actuating element (26), in particular shift finger, for acting on connecting elements (10) for the engagement of transmission stages and on which actuating shaft (20) is provided at least one auxiliary actuating element (28) for acting on connecting elements (10) for disengaging and/or locking transmission stages, with the at least one auxiliary actuating element (28) having functional regions (40, 40a) for a movement in the same direction and functional regions (32, 32a) for a movement in the opposite direction, and with the respective shift mouth (12) having functional regions (42, 42a) for a movement in the same direction and functional regions (34, 34a) for a movement in the opposite direction, with the movement of the relevant connecting element (10) in the same direction or in the opposite direction being viewed in relation to that connecting element (10) which is moved by means of the main actuating element (26) during a continued movement of the actuating shaft (20), with the at least one auxiliary actuating element (28), in its neutral position, extending substantially transversely, in particular perpendicularly, to the movement or axial direction (16) of the connecting elements (10), and wherein, on the at least one auxiliary actuating element (28) and on at least one shift mouth (12), the respective functional regions (40, 40a and 42, 42a) for the movement in the same direction are mirror-symmetrical, in relation to said neutral position, relative to the respective functional regions (32, 32a and 34, 34a) provided on the same element (28 and 12) in each case for the movement in the opposite direction, specifically with respect to a plane defined by the rotational axis (30) of the actuating shaft (20) and the movement or axial direction (16) of the connecting element (10), **characterized in that** said at least one shift mouth (12) and the at least one auxiliary actuating element (28) are in each case of non-planar, in particular curved, design in the region of the respective functional regions (32, 32a, 34, 34a, 40, 40a, 42, 42a) for the movement in the same direction and for the movement in the opposite direction.

2. Transmission device according to Claim 1, **characterized in that** said at least one shift mouth (12) is of asymmetrical design with respect to said plane.

3. Transmission device according to one of the preceding claims, **characterized in that** the at least one main actuating element (26), in its neutral position, also extends substantially transversely, in particular substantially perpendicularly, to the movement or axial direction (16) of the connecting element (10).

4. Transmission device according to one of the preceding claims, **characterized in that** functional regions (32, 32a, 34, 34a, 40, 40a, 42, 42a) of the at least one auxiliary actuating element (28) and/or of the at least one shift mouth (12) are formed in the manner of cycloids and/or evolvents, or have one or more correspondingly designed sections.

5. Transmission device according to one of the preceding claims, **characterized in that** the shift mouths (12) are of closed design.

6. Transmission device according to one of the preceding claims, **characterized in that** the at least one auxiliary actuating element (28) and/or the main actuating element (26) have/has an aperture through which the actuating shaft (20), which supports the at least one auxiliary actuating element (28) and the main actuating element (26), extends.

7. Transmission device according to one of the preceding claims, **characterized in that** the respective connecting element (10) has a common shift mouth (12) for the selective engagement of a main actuating element (26) and of at least one auxiliary actuating element (28).

8. Transmission device according to one of the preceding claims, **characterized in that** the at least one shift mouth (12) and the at least one auxiliary actuating element (28) are in each case of non-planar, in particular curved, design at least in those regions of their functional regions (32, 32a, 34, 34a, 40, 40a, 42, 42a) for the movement in the same direction and for the movement in the opposite direction which come into contact with one another during a movement, effected by means of an auxiliary actuating element (28), of the connecting element (10) in the direction of the neutral position of the connecting element (10).

9. Transmission device according to one of the preceding claims, **characterized in that** the shift mouths (12) and the at least one auxiliary actuating element (28) each have functional regions (36, 36a and 38, 38a) for locking, wherein in a neutral position of the auxiliary actuating element (28), said functional regions (36, 36a) of the auxiliary actuating element (28) are mirror-symmetrical with respect to the plane defined by the rotational axis (30) of the actuating shaft (20) and the movement or axial direction (16) of the connecting element (10), and with said functional regions (38, 38a) of the respective shift mouth (12) being mirror-symmetrical with respect to said plane.

10. Assembly, which is composed of a plurality of connecting elements (10) and of an actuating device (18) for actuating said connecting elements (10), for a transmission device (1) according to one of the preceding claims.

## Revendications

1. Dispositif de transmission pour un véhicule automobile, qui présente une pluralité de jeux de roues formant des rapports de transmission, ainsi que plusieurs éléments de connexion (10) disposés de manière déplaçable axialement et pourvus à chaque fois d'une mâchoire de changement de vitesse (12), tels que des tringles de changement de vitesse ou des fourchettes de changement de vitesse, et qui présente en outre pour la commande des éléments de connexion (10) un dispositif de commande (18) avec un arbre de commande (20) monté de manière déplaçable en rotation ou par pivotement et axialement, sur lequel est prévu, pour agir sur des éléments de connexion (10) pour enclencher des rapports de transmission, au moins un élément de commande principal (26), en particulier un doigt de changement de vitesse, et sur lequel est prévu, pour agir sur des éléments de connexion (10) pour désenclencher et/ou bloquer des rapports de transmission, au moins un élément de commande auxiliaire (28), l'au moins un élément de commande auxiliaire (28) présentant des régions fonctionnelles (40, 40a) pour un mouvement dans le même sens, ainsi que des régions fonctionnelles (32, 32a) pour un mouvement en sens inverse et la mâchoire de changement de vitesse respective (12) présentant des régions fonctionnelles (42, 42a) pour un mouvement dans le même sens, ainsi que des régions fonctionnelles (34, 34a) pour un mouvement en sens inverse, le mouvement dans le même sens ou en sens inverse de l'élément de connexion concerné (10) devant être considéré par rapport à l'élément de connexion (10) qui est déplacé au moyen de l'élément de commande principal (26) lors du mouvement poursuivi de l'arbre de commande (20), l'au moins un élément de commande auxiliaire (28) s'étendant dans sa position neutre essentiellement transversalement, notamment perpendiculairement, à la direction de déplacement ou la direction axiale (16) des éléments de connexion (10), et par rapport à cette position neutre au niveau de l'au moins un élément de commande auxiliaire (28) et d'au moins une mâchoire de changement de vitesse (12), les régions fonctionnelles respectives (40, 40a, respectivement 42, 42a) pour le mouvement dans le même sens sont symétriques par rapport aux régions fonctionnelles respectives (32, 32a, respectivement 34, 34a) prévues sur le même élément respectif (28, respectivement 12) pour le mouvement en sens inverse, et ce par rapport à un plan qui est défini par l'axe de rotation (30) de l'arbre de commande (20) et la direction de déplacement ou axiale (16) de l'élément de connexion (10), **caractérisé en ce que** cette au moins une mâchoire de changement de vitesse (12) et l'au moins un élément de commande auxiliaire (28) sont réalisés au niveau des régions fonctionnelles respectives (32, 32a, 34, 34a, 40, 40a, 42, 42a) pour le mouvement dans le même sens et dans le sens inverse, à chaque fois sous forme non plane, notamment sous forme cintrée.

2. Dispositif de transmission selon la revendication 1, **caractérisé en ce que** cette au moins une mâchoire de changement de vitesse (12) est configurée sous forme asymétrique par rapport à ce plan.

3. Dispositif de transmission selon l'une quelconque des revendications précédentes, **caractérisé en ce que** l'au moins un élément de commande principal (26) s'étend aussi dans sa position neutre essentiellement transversalement, notamment essentiellement perpendiculairement à la direction de déplacement ou axiale (16) de l'élément de connexion (10).

4. Dispositif de transmission selon l'une quelconque des revendications précédentes, **caractérisé en ce que** des régions fonctionnelles (32, 32a, 34, 34a, 40, 40a, 42, 42a) de l'au moins un élément de commande auxiliaire (28) et/ou de l'au moins une mâchoire de changement de vitesse (12) sont réalisées sous forme de cycloïdes et/ou de développantes, ou présentent une ou plusieurs portions de forme correspondante.

5. Dispositif de transmission selon l'une quelconque des revendications précédentes, **caractérisé en ce que** les mâchoires de changement de vitesse (12) sont réalisées sous forme fermée.

6. Dispositif de transmission selon l'une quelconque des revendications précédentes, **caractérisé en ce que** l'au moins un élément de commande auxiliaire (28) et/ou l'élément de commande principal (26) présentent un passage à travers lequel s'étend l'arbre de commande (20), qui porte l'au moins un élément de commande auxiliaire (28) et l'élément de commande principal (26).

7. Dispositif de transmission selon l'une quelconque des revendications précédentes, **caractérisé en ce que** l'élément de connexion respectif (10) présente une mâchoire de changement de vitesse commune (12) pour l'engagement sélectif d'un élément de commande principal (26) et d'au moins un élément de commande auxiliaire (28).

8. Dispositif de transmission selon l'une quelconque des revendications précédentes, **caractérisé en ce que** l'au moins une mâchoire de changement de vitesse (12) et l'au moins un élément de commande auxiliaire (28) sont réalisés à chaque fois sous forme non plane, notamment sous forme cintrée, au moins au niveau de leurs régions fonctionnelles (32, 32a, 34, 34a, 40, 40a, 42, 42a) pour le mouvement dans le même sens et le mouvement en sens inverse qui viennent en contact mutuellement à chaque fois pendant un mouvement de l'élément de connexion (10) provoqué par un élément de commande auxiliaire (28) qui est orienté dans le sens de la position neutre de l'élément de connexion (10).

9. Dispositif de transmission selon l'une quelconque des revendications précédentes, **caractérisé en ce que** les mâchoires de changement de vitesse (12) et l'au moins un élément de commande auxiliaire (28) présentent à chaque fois des régions fonctionnelles (36, 36a, respectivement 38, 38a) pour le blocage, et dans une position neutre de l'élément de commande auxiliaire (28), ces régions fonctionnelles (36, 36a) de l'élément de commande auxiliaire (28) étant symétriques par rapport au plan défini par l'axe de rotation (30) de l'arbre de commande (20) et la direction de déplacement ou axiale (16) de l'élément de connexion (10), ces régions fonctionnelles (38, 38a) de chaque mâchoire de changement de vitesse (12) étant symétriques par rapport à ce plan.

10. Module qui se compose de plusieurs éléments de connexion (10) et d'un dispositif de commande (18) pour commander ces éléments de connexion (10) pour un dispositif de transmission (1) selon l'une quelconque des revendications précédentes.
